# EUROPEAN PATENT APPLICATION

(11) **EP 2 020 268 A1**
(43) Date of publication of application: **04.02.2009**
(21) Application number: 08012575.0
(22) Date of filing: 11.07.2008
(51) Int. Cl.: B23B 13/08

(54) **Bar guide tube for lathes**

(30) Priority: 02.08.2007 IT MI20071591
(71) Applicant: UNILOCK DI UMBERTO CROSTI & C. S.a.s, 20090 Trezzano sul Naviglio (MI) (IT)
(72) Inventor: Crosti, Umberto, 20090 Trezzano sul Naviglio, Milano (IT)
(74) Representative: Petruzzelli, Antonio

(57) **Abstract**

Bar guide tube (1) for lathes (2), composed of a plurality of modular elements attached one to the other, said guide tube being inserted in the hole which allows the passage of the bars machined on the lathe, reducing the diameter of said hole and allowing the machining of bars with diameter smaller than that of the original hole. Each modular element is provided with a central body (9. 9', 9") in polyurethane rubber and is joined to the next element by means of nipples (8) or other known systems.

## Description

The present invention relates to a modular bar guide tube for lathes.

Lathes for metal bars are notoriously composed of a plinth whereon the various elements are mounted, such as motor, transmission members, spindle, tailstock, turret for the tools, etc. Industrial lathes are used to machine metal bars with length of up to a few metres and, so as to allow the fixing of said bars to the spindle, the lathe is provided with a through hole through which the bars are inserted for machining.

The through hole fully traverses the spindle and the rear part of the lathe and must have adequate dimensions for allowing the passage of bars with a diameter as large as the largest bar which can be machined by the same lathe. If for example the through hole has a diameter of 61 mm, the lathe can machine all bars with maximum diameter of 60 mm, while bars with a larger diameter, not being able to traverse the through hole, will be allotted to other lathes.

The machining of very long bars means that, at high rotation speeds, vibratory and oscillatory phenomena arise which undermine the precision of the machining and clamping of the same bar. The operative is therefore forced to work at a low rotation speed, with a negative effect on the productivity of the lathe. These vibration phenomena are progressively more marked for bars with diameter smaller than the diameter of the through hole. If the bar has a diameter slightly smaller than the hole, the vibration phenomena are dampened by the hole itself which contains the bar and prevents it from oscillating excessively when it is rotated. When however the bar has a diameter that is much smaller than that of the through hole, it is free to oscillate until it strikes against the walls of said hole, thus vibrating and forcing the operative to reduce the rotation speed.

To avoid these disadvantages guide tubes are generally used for bars of smaller diameter and are inserted inside the through hole. These guide tubes are metal and have an outside diameter which matches the diameter of the through hole, while the inside one is slightly greater than the diameter of the bar to be machined. In this way a reduction in the diameter of the through hole is created, dampening the vibrations of the bar and allowing a higher rotation speed.

For each bar with diameter smaller than that of the through hole it is necessary to use a different guide tube, i.e. a tube which has an internal diameter slightly greater than the diameter of the bar to be machined, forcing the firm which uses the lathe to procure various guide tubes of different diameter.

These tubes must also be made to measure for each lathe: the length of the through hole, the arrangement of the elements for the fixing of said tube, the width of the attachment flange, etc. vary in fact from manufacturer to manufacturer, considerably increasing the costs of manufacture of each individual tube which cannot be mass produced and consequently considerably increasing the overall costs for the end user.

Another disadvantage of current guide tubes is represented by the difficulty of replacement: industrial lathes are normally associated with an automatic bar loader used to insert and change in short spaces of time the bars inside the lathe, considerably increasing the productivity of the same. The bar loader is placed adjacent to the lathe so that the bar is pushed through the through hole and is then blocked by the spindle.

When bars of different diameter are machined, as mentioned, it is necessary to change the guide tube and to do this, in some machine types, the automatic bar loader, weighing a few quintals, has to be moved backwards. Tracks therefore have to be provided to move the automatic loader backwards, replace the guide tube and then move the loader forwards into the working position. The operation of replacement of the guide tube thus becomes laborious and costly in terms of the necessary infrastructure such as tracks or other equivalent systems for the movement of the automatic bar loader.

The object of the present invention is that of providing a modular guide tube composed of several elements that are assembled together and which can in this way be adapted without difficulty to the most widely differing models of lathes.

Another object of the present invention is to provide a guide tube which associates parts in polyurethane with metal joints, enabling better absorption of the vibrations of the bar being machined, thus enabling a higher rotation speed and a consequent increase in the productivity of the lathe.

A further object of the present invention is to make a guide tube which can be replaced without having to move the automatic bar loader, making the provision of tracks or other devices superfluous and the actual operation of replacement of the guide tube faster.

Another object of the present invention is to provide a guide tube which, thanks to its component materials which allow better absorption of vibrations, can be used for bars with a diameter which is even considerably smaller than the inside diameter of the tube so that the end user can in this way purchase a smaller number of tubes for machining bars of different diameter.

Last but not least an object of the present invention is to provide a guide tube which, together with improved performances, has costs lower than the guide tubes available on the market.

These and other aspects will be made clearer from the reading of a preferred embodiment of the present invention, to be read by way of a non-limiting example of the more general concepts claimed.

The following description refers to the accompanying drawings in which:
Figure 1 is a schematic representation of the assembly of the lathe and of the bar loader, the cross section showing the position of the guide tube in relation to the two machines:
Figure 2 is a section of the guide tube assembled;
Figure 3 is a section of an element in polyurethane rubber of the guide tube, provided with metal ends for joining;
Figure 4 is a section of a nipple for the joining of the various elements of the guide tube;
Figure 5 is a view of three quarters of the attachment flange of the guide tube.

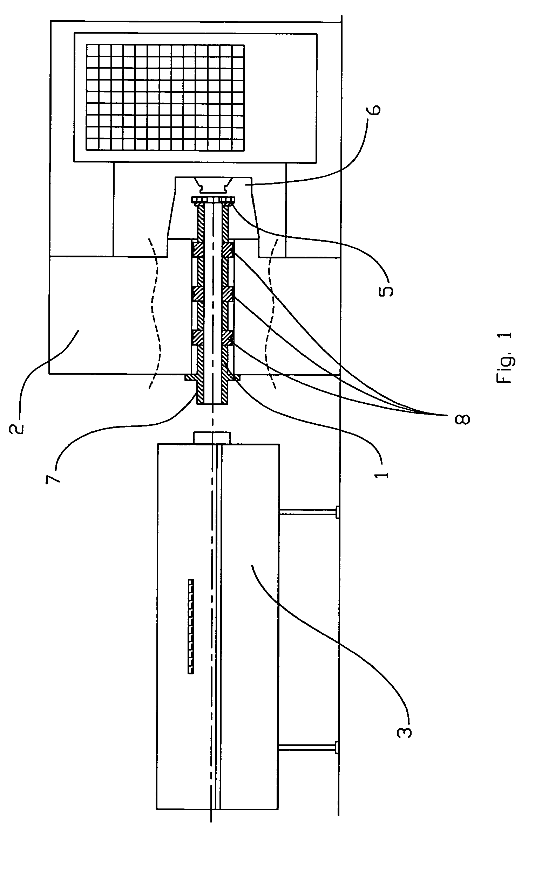

Referring to Figure 1, it shows the lathe 2 flanked by the automatic bar loader 3, both known elements. Inside the lathe 2 the guide tube 1 is positioned. Said guide tube is placed in the through hole which goes from the mouth located at the exit of the automatic bar loader 3 to the entrance in the spindle 6 of the lathe. As is known it is the spindle 6 which, via its own collet for the bars, transmits the rotation movement to the bar being machined, not shown here, which is pushed by the bar loader 3 inside it and traverses the guide tube 1. A finned bushing is mounted at the end of the guide tube 1 and is inserted in the sleeve of the spindle so as to couple the guide tube 1 with the spindle and convey towards the collet of the same spindle the bar which is passing inside the tube 1.

The guide tube 1 is attached to the lathe by means of a metal flange 7 with holes located at the threaded holes already present in the rear part of the lathe 2.

The guide tube 1 rests on the through hole of the lathe 2 by means of nipples 8 which join the various elements.

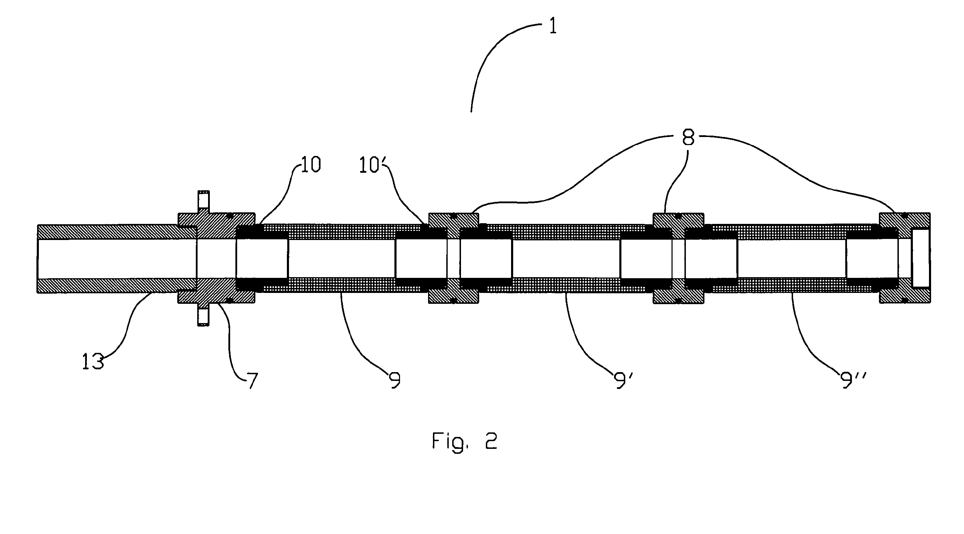

Referring to Figure 2, it can be seen how the guide tube 1 is made up of various units 9, 9' and 9" made in polyurethane rubber and screwed, via the vulcanised inserts on the same, onto the nipples 8 which act as a joint between the various units. The flange 7 is mounted at one end for fixing the tube on the lathe 2, in addition to an extension 13 which serves to bring the outlet of the automatic bar loader 3 close to the mouth of the guide tube 1.

Alternatively, in a second embodiment of the present invention, the guide tube 1 can be attached directly onto the spindle of the lathe without the need for the flange 7.

The overall length of the guide tube 1 is such as to allow complete insertion in the through hole of the lathe 2, guide the bar as far as the spindle 6 and dampen vibration and oscillation phenomena of the same when machining starts.

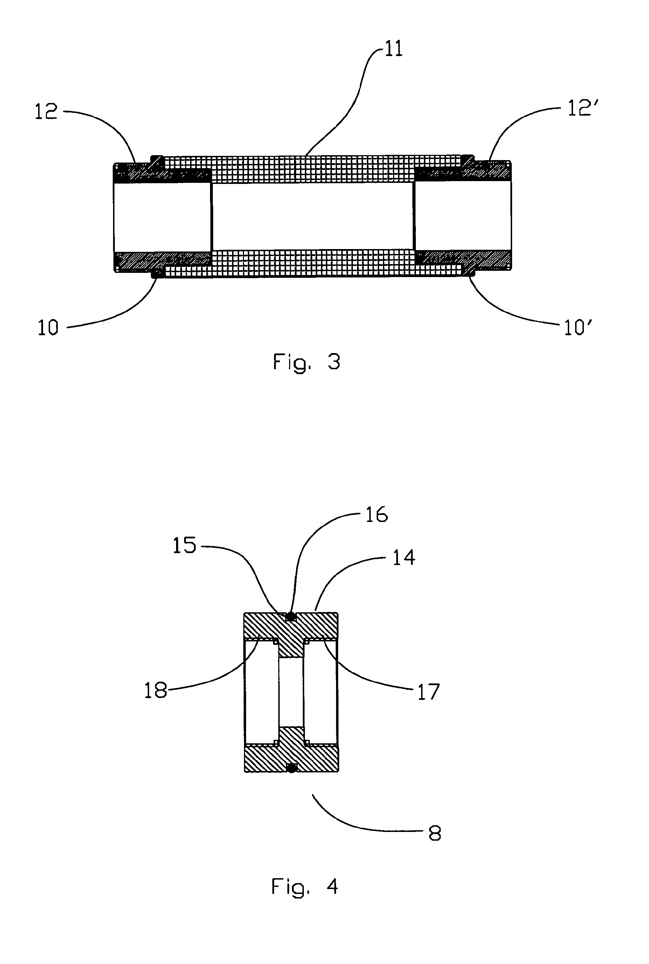

Referring to Figure 3, the unit 9 is made up of a central part 11 in polyurethane rubber which is vulcanised on the metal ends 10 and 10'. Both the central part 11 and the metal ends 10 and 10' are cylindrical and internally hollow to allow the passage of the bar. The metal ends 10 and 10' are integral, thanks to the vulcanisation, with the central part 11 and have threading on the outside edges 12 and 12' to allow attachment of the various units one to the other by means of nipples.

Referring to Figure 4, the nipple 8 is made in metal and has the shape of a hollow cylinder. On the outer surface 14 there is a groove 15 wherein an O ring 16 is inserted. Said O ring goes to rest on the through hole of the lathe 2 so as to support the guide tube 1 in its interior. Internally, on the surfaces 17 and 18, the nipple has threading so as to allow screwing of the ends 10 and 10' of the elements 9, 9' and 9" of the guide tube 1.

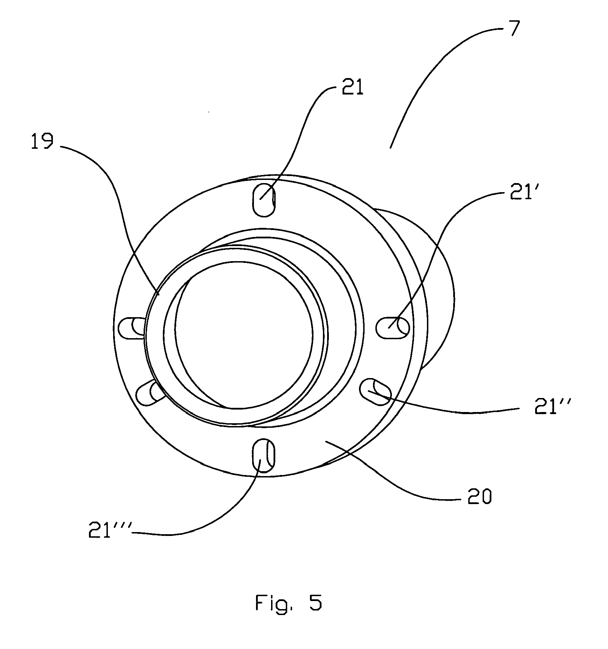

Figure 5 shows the attachment flange 7, made up of a hollow cylindrical portion 19 and of an actual flange 20. In said flange 20 holes are formed at an even distance (denoted by reference numerals 21, 21' 21" and 21"') in such a way that said holes can match the threaded holes in the lathe 2 and allow, through the use of bolts or the like, attachment of the assembly of the guide tube 1 to said lathe 2.

A second embodiment of the guide tube provides for the possibility of attaching the guide tube without using the flange 7. On some spindles in fact there is a centring bushing, known to the prior art. Said bushing can therefore be used to attach the end of the guide tube 1. Referring to Figure 3, the end 10' of the final element of the guide tube 1 can be screwed directly onto the centring bushing present on the spindle, making the use of the attachment flange 7 superfluous.

Thus a guide tube is provided that can be adapted to any lathe thanks to the choice of the length of the individual elements 9, 9' and 9", of the sizes of the nipples 8 and of the features of the attachment flange 7 or, alternatively, of the features of the centring bushing present on the spindle.

For example it is possible to use segments with standard length whereto a single element of adequate length is added to adapt to the longitudinal dimensions of the through hole of the lathe whereon the guide tube is to be mounted. It will therefore be possible to obtain a high quantity of elements 9, 9' of standard length, thus lowering the production costs, and only the elements 9" will be made to measure to adapt to the individual lathes, reducing the overall cost of the guide tube.

It has also been ascertained experimentally that the use of a material such as polyurethane rubber considerably increases the capacity of the guide tube for absorbing the vibrations of the bar being machined. This means that the speed of rotation of the bar can be increased, consequently incrementing the speed of machining and the productivity of the lathe.

As a consequence of the improved absorption of the vibrations it is possible to use the same guide tube to channel bars with diameter also appreciably smaller than the internal diameter of the tube.

Polyurethane rubber has in fact such performances that the vibrations induced by rotation of the spindle are absorbed effectively also for smaller bars, thus enabling machining of bars of different diameter with the same guide tube.

The modularity of the guide tube 1 also allows the replacement operation to take place rapidly and without any moving of the automatic bar loader. Again referring to Figure 1, the distance between the bar loader 3 and the lathe 2 is such that, by dismantling one by one the component parts of the guide tube 1, the latter can be extracted from the through hole of the lathe 2 without touching the end of the bar loader 2. Thus any operation of moving of the same is superfluous and, in the case of newly constructed production systems, the building of tracks or other devices for moving the bar loader becomes superfluous.

## Claims

1. Bar guide tube (1) for lathes (2), **characterised in that** it is composed of at least two modular elements attached one to the other.

2. Bar guide tube (1) according to the previous claim, **characterised in that** it is inserted in the hole which allows the passage of the bars being machined on the lathe (2), reducing the diameter of said hole and allowing the machining of bars with diameter smaller than that of the original hole.

3. Bar guide tube (1) according to claim 1, **characterised in that** each modular element has a central body (1, 9', 9")in polyurethane rubber and is joined to the next element by means of nipples (8) or other known systems.

4. Bar guide tube (1) according to the previous claim, **characterised in that** each modular element has metal ends (10, 10') whereon the polyurethane rubber is vulcanised, said ends being integral with said central body and having threading (12, 12') externally for attachment on said nipples.

5. Bar guide tube (1) according to claim 1, **characterised in that** the attachment of said guide tube on the lathe takes place via a flange (7) attached to the outermost modular element of the guide tube, said flange being in turn attached to the lathe (2) by means of bolts, screws or the like.

6. Bar guide tube (1) according to claim 1, **characterised in that** attachment of said guide tube (1) takes place by screwing said guide tube on the centring bushing present on the spindle (6) of the lathe (2), said centring bushing having threading suitable for holding the threaded metal end of the innermost modular element of the guide tube.

7. Bar guide tube (1) according to claim 1, **characterised in that** an extension can be mounted to increase the overall length of said guide tube.

8. Bar guide tube (1) according to claim 3, **characterised in that** the nipples (8) for joining the various modular elements are made in metal or another material with equivalent hardness.

9. Bar guide tube (1) according to the previous claim, **characterised in that** the nipples (8) have at least one O ring (16)on the external surface (14).
